# NEW EUROPEAN PATENT SPECIFICATION

(11) **EP 0 060 009 B2**
(45) Date of publication and mention of the opposition decision: **23.06.1993**
(45) Mention of the grant of the patent: 04.12.1985
(21) Application number: 82200302.6
(22) Date of filing: 08.03.1982
(51) Int. Cl.: B65G 19/16, A01K 39/00

(54) **A conveyor system**
Fördersystem
Système de transport

(30) Priority: 11.03.1981 NL 8101186
(43) Date of publication of application: 15.09.1982
(73) Proprietor: ROXELL N.V., B-9990 Maldegem (BE)
(72) Inventor: van Rooijen, Gerardus Henricus C.M., B-9990 Maldegem (BE)
(74) Representative: Iemenschot, Johannes Andreas, Ir.

(56) References cited:
- FR-A- 802 597
- GB-A- 762 411
- US-A- 2 232 606
- US-A- 3 003 464
- US-A- 3 191 581
- Magazine "Zootecnica International" March 1981, no. 3, pp. 10-11
- Prospectus of the Firm Big Dutchman, A Division of U.S. Industries Inc., Zeeland, Michigan, USA, 1970, 1/70, 10036
- Prospectus of the Firm IBO Tecnica Alemana para Ganaderia 1976
- Prospectus of the Firm Chore-Time Equipment Inc., Milford, Indiana 46542 U.S.A., publ. 1972, ref. 2TFS-1-72. T.2.296

## Description

The invention relates to a feed conveyor system comprising a continuous track in the form of feed display or dispensing channels interconnected by ducts of circular cross-section or tubes having arcuate shape sections, an endless conveying element running through the channels and the ducts or tubes and adapted to follow the arcuate shape sections, said endless conveying element defining scraping elements and being movable through the continuous track by driving means provided with a sprocket wheel situated in a straight section of said track and radially engaging the conveying element in longitudinal direction, the pitch of the teeth of the sprocket wheel being adapted to the pitch of the scraping elements of the conveying element, a duct section being connected to a feed supply.

Such a conveyor system is known from GB-A-762 411. In this known conveyor system the endless conveying element is an assembly of a plurality of flights or scrapers each rigidly connected to a connecting rod. In order that the conveying element may pass the arcuate shape sections of the ducts, the connecting rods are pivotably linked together. For this purpose the connecting rods are provided with spherical or hemi-spherical enlargements which are fitted in a cup-shaped head belonging to a next connecting rod. Further the teeth of the sprocket wheel of the driving means are U-shaped, so that arms of the teeth may pass on either side of a connecting rod to contact the driving face of the associated flight or scraper and no tendency of tilting the scraper occurs.

The disadvantage of this conveyor is the very complicated design of the driving element, whereas special measures are necessary to avoid penetration of material to be conveyed into the joints between the connecting rods.

It is an object of the invention to simplify a conveyor system of this kind.

According to the invention this is attained with a feed conveyor system of the kind referred toatthe beginning and is characterized in that the scraping elements are formed by a rectangular wire bent to form an open helical spring forming the conveying element and having the small sides of the rectangular cross-section of the wire positioned at the radial outside and innerside of the helical spring and in that the teeth of the sprocket wheel (13) are provided with bevelled faces, said teeth penetrating a straight horizontal section of the track in a zone opposite to the bottom of said section so as to contact the long sides of the rectangular cross-section of the wire between windings of the helical spring.

The advantage of the latter is that by the long sides of the rectangular cross-section of the wire a very good conveyance of material through the ducts and channels is obtained. Another advantage is that by the long sides of the cross-section of the wire and the bevelled sides of the teeth of the sprocket wheel a relative large surface of contact between the two members is obtained, so reducing wear of material. Besides the large surface of contact allows very little rotation of the helical spring as a result of a tangential force also exerted on the windings by the side of the teeth of the sprocket wheel, so that wear of material is also reduced.

It is observed, that rotating augers in the form of an helical wire of finite length and of rectangular cross section are known in the art. (Prospectus of the firm CHORE-TIME Equipment, Inc., Milford, Indiana 46542, U.S.A ; published 1972 under the reference 2TFS-1-72.)

Use of a conveying element formed by a helical spring is known per se e.g. from the US-A-3 003 464. The wire of the helical spring has a circular cross-section and the helical spring runs around angle wheels in a circumferential groove of same. Such an angle wheel having lateral teeth in its circumferential groove is used as driving wheel. Such a conveying system is complicated and deposits of material to be conveyed can stick into the recesses of the wheels to contaminate fresh material.

In a practical embodiment according to the invention the sprocket wheel of the driving means is situated in a housing, the bottom of said straight section forming the bottom of the housing and having a part of cylindrical shape opposed to the sprocket wheel which bottom is in alignment with the inner surface of the ducts connected to the housing.

The invention will be illustrated with respect to an embodiment as shown in the drawing, wherein:
Fig. 1 is a schematic perspective view of a conveyor system according to the invention, constructed as a feed conveyor in a cattle shed;
Fig. 2 is also a perspective view of a conveyor system on a larger scale;
Fig. 3 is a schematic perspective view of a drive system;
Fig. 4 is an exploded view of a housing for a gear wheel of a drive system;
Fig. 5 is a perspective view of a feeding station of the conveyor system;
Fig. 6 is a schematic perspective view of a chicken battery provided with a conveying system according to the invention; and
Fig. 7 is a cross-sectional view of a channel in the conveyor system according to the invention.

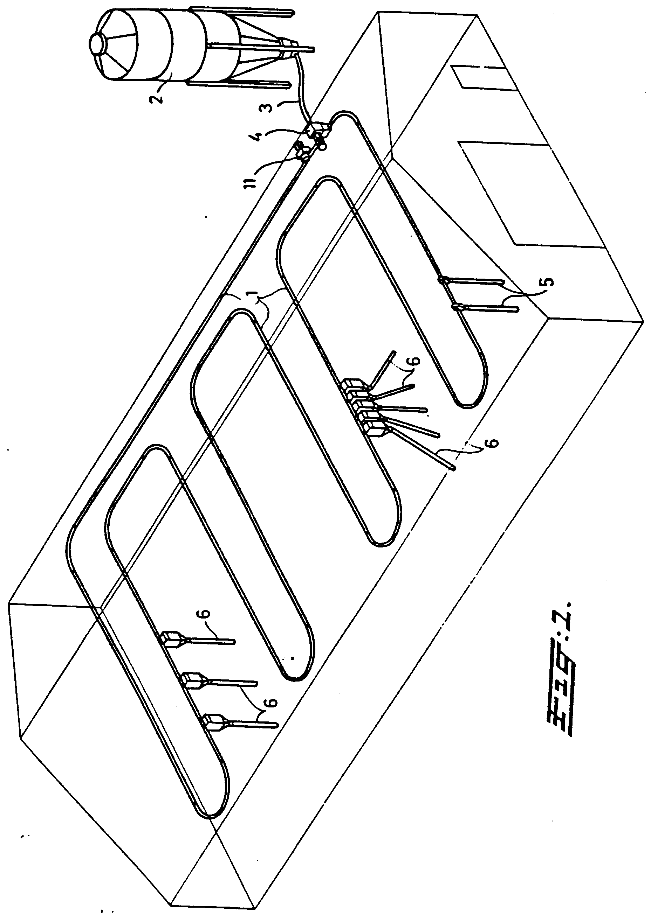

As illustrated in Fig. 1, the conveyor system according to the present invention consists of a channel system in the form of a main feed line extending over the cattle shed area in a closed circuit. The fedder for dispensing is fed to an inlet station 4 from a silo or similar reservoir 2 via a conduit 3. Means in the inlet station 4 ensure that the material reaches the main feed line 1 and the fodder is conveyed to a large number of delivery stations or feed conduits 5 and/or 6 by means of a driver or scraper element 9 disposed in the conduit. The feed conduits 5 are intended for continuous feeding, while the feed conduits 6 are adapted for dispensing the fodder in quantitatively controlled portions. The manner of dispensing will not be described in greater detail because it does not form part of the subject matter of the present invention. In practice the length of the main feed line may be 30 to 150 m. The main feed line may also be disposed directly beneath the reservoir2. Conduit 3 can then be omitted.

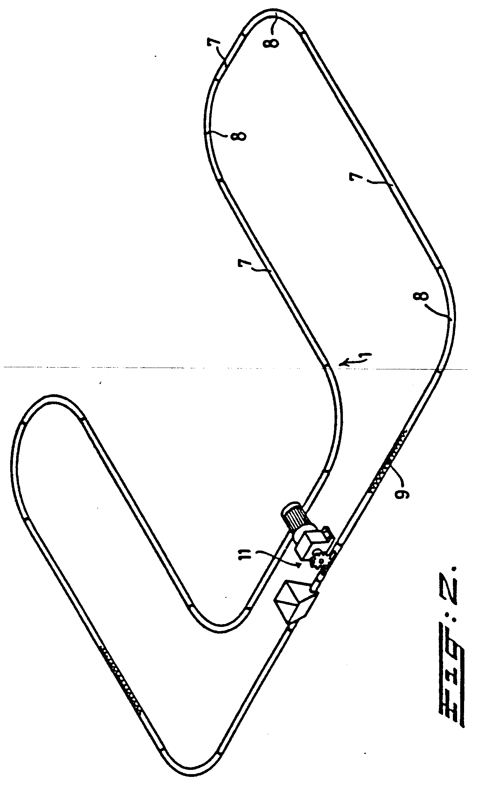

Referring now to Fig. 2, the pipeline 1 is made from plastics tubes 7 and bends 8 of a plastics material having a very high resistance to wear. The radius of the bends 8 may, for example, be 50 cm. The pipes 7 and bends 8 are coupled in such a manner, e.g. by means of sleeves (not shown), that there is a smooth passage inside the pipeline. The driver element disposed in the pipes, is a scraper 9 which continuously extends by consecutive identical cross-sections and constitutes an endless helical spring which consequently has a fixed pitch which repeatedly comes into contact with an arbitrary tangent extending in the direction of conveyance. (The driver element 9 is illustrated more clearly in Fig. 3.) The tangent extending in the direction of conveyance is denoted by reference 10 while the pitch is denoted by the letter S. The scraper 9 is enclosed an an endless spring in the pipeline 1, which is constructed as a channel system with a closed circuit, a drive means 11 being provided for axially moving the scraper 9 in the pipeline.

As will be obvious from Fig. 3, the scraper consists of windings formed with a constant pitch, corresponding to the pitch S, and is accordingly a helical spring. The material used forthis purpose may, forex- ample, be a hardened spring steel wire which accordingly has successive identical cross-sections denoted by reference 12 having the form of a rectangle.

The drive system 11 comprises a gear wheel 13 meshing with the scraper 9, the gearwheel pitch corresponding to the fixed pitch S of the scraper. The gearwheel 13 extends through a slot 14 extending in the longitudinal direction of the pipe 7. Since the pitch S of the scraper 9 is relatively large, the gear wheel 13 has bevel teeth and its tooth angle matches the pitch angle of the turns of the scraper. The gearwheel 13 of the drive system 11 can be driven in manner known per se at the correct speed of rotation, by means of a motor and reduction gear. Instead of the slot 14 in the pipe 7 the gearwheel 13 may be situated in a case, the opposite walls 15 of which being provided with a connecting sleeve 16 for connecting the channel system. The bottom 17 of the case has been adapted to receive the scraper 9 or helical spring, see Fig. 4.

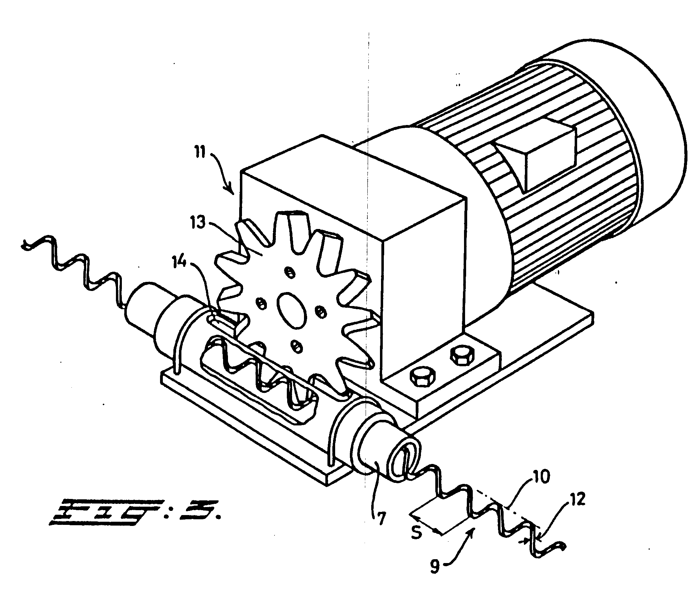

The filling station 4 is received in the pipeline, for example, in the form of a hopper (as shown in detail in Fig. 5) and the steep edges of the windings of rectangular cross-section convey the material from this hopper through the pipeline. Depending upon the size of the exit openings at the outlet conduits, the material will be conveyed through the entire pipeline, for example, at a speed of 10 to 25 m per minute, material also being conveyed in the interior of the scraper constructed as a helical spring. It is impossible for the material to jam against the inner wall of the pipeline 1 because the windings prevent such a jamming. Gearwheel 13 thus pushes the scraper through the pipeline 1.

Due to the resistance of the scraper and the material to be conveyed, the scraper 9 constructed as a helical spring, will be somewhat compressed, directly after the gear wheel 13, but the gear wheel can also exert a pulling action on the scraper directly in front of said gear wheel.

Good results are obtained with a scraper having rectangular cross-section windings of 8 x 3.5 mm, for example. The relationship between the rectangular shape and the helical construction of the scraper is then such that the inside diameter is 22.6 mm, for example, in case of an outside diameter of 38.6 mm. The resulting high edges of the windings provide a good conveyance of the material.

As shown in Fig. 5 a gear wheel 18 driven by the scraper 9 has been situated within the hopper 20 of the inlet station 4 or feeding station for the fodder. This gear wheel 18 prevents the fodder for bridging in the hopper and a continuous supply of the fodder is made certain.

According to Fig. 6 the conveying system has been arranged in a cage feeder for a chicken battery 19. The channel system 1 is constructed in three floors of cages and each floor formed by a channel system having a closed circuit which has been adapted as an open trough section 21; said open trough section 21 being adapted as a manger, has been connected to a pipeline section 22 in each floor. For each floor a gear wheel 13 has been arranged in a pipeline section 22. The gear wheels are interconnected by means of a chain transmission 23 and driven by one single motor 24.

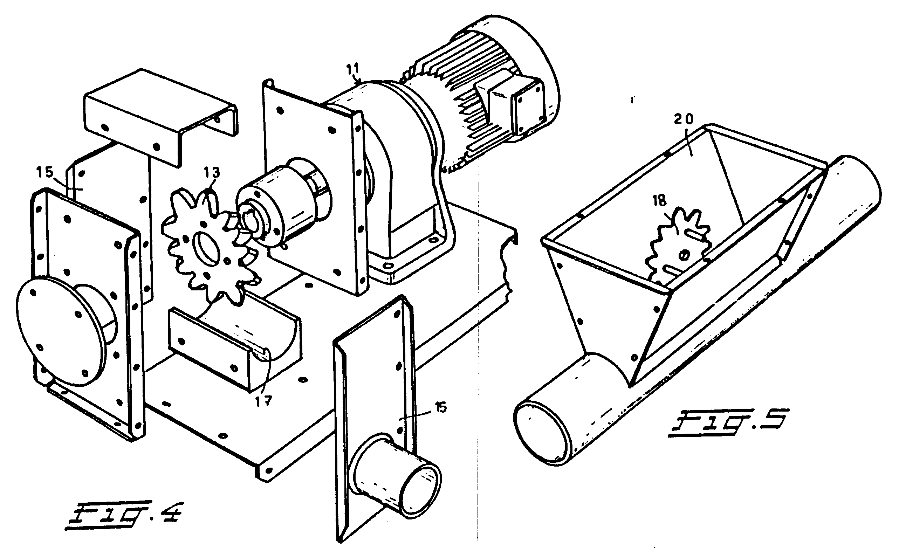

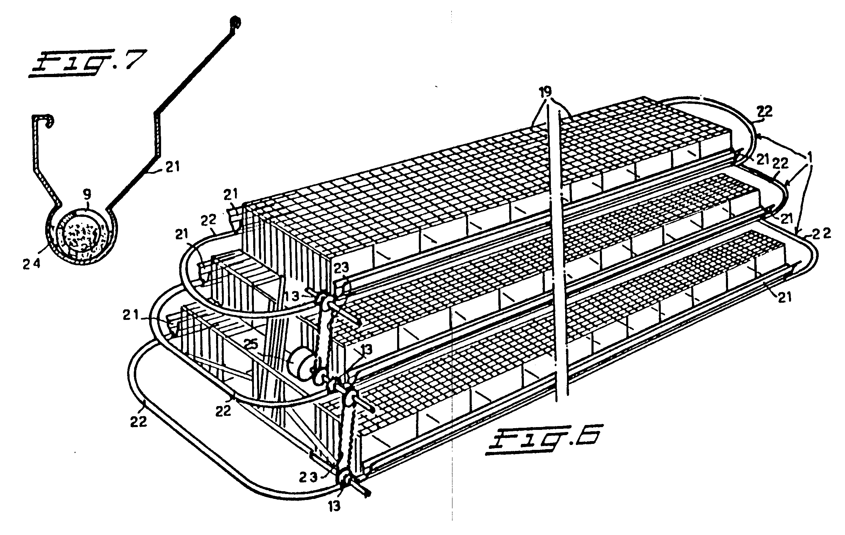

Fig. 7 shows that the bottom 24 of the open trough section has been adapted to the cross-sectional shape of the scraper 9.

## Claims

1. Afeed conveyor system comprising a continuous track in the form of feed display or dispensing channels interconnected by ducts of circular cross-section or tubes having arcuate shape sections, an endless conveying element running through the channels and the ducts or tubes and adapted to follow the arcuate shape sections, said endless conveying element defining scraping elements and being movable through the continuous track by driving means provided with a sprocket wheel situated in a straight section of said track and radially engaging the conveying element in longitudinal direction,, the pitch of the teeth of the sprocket wheel being adapted to the pitch of the scraping elements of the conveying element, a duct section being connected to a feed supply, characterized in that the scraping elements are formed by a rectangular wire bent to form an open helical spring (9) forming the conveying element and having the small sides of the rectangular cross-section (12) of the wire positioned at the radial outside and innerside of the helical spring and in that the teeth of the sprocket wheel (13) are provided with bevelled faces, said teeth penetrating a straight horizontal section of the track in a zone opposite to the bottom of said section so as to contact the long sides of the rectangular cross-section of the wire between windings of the helical spring.

2. A feed conveyor system according to claim 1, characterised in that the sprocket wheel of the driving means is situated in a housing, the bottom of said straight section forming the bottom (17) of the housing and having a part of cylindrical shape opposed to the sprocket wheel (13) which bottom is in alignment with the inner surface of the ducts connected to the housing.

## Patentansprüche

1. Futtertransportsystem mit einer kontinuierlichen Bahn in Form von Fütterungstrog- und Verteilerkanälen, die durch Leitungen kreisförmigen Querschnitts oder Rohre mit gebogenen Sektionen miteinander verbunden sind, mit einem endlosen Förderelement, das durch die Kanäle und die Leitungen oder Rohre läuft und so ausgebildet ist, daß es den gebogenen Sektionen folgt, wobei das endlose Förderelement Schabelemente bildet und durch die kontinuierliche Bahn mittels eines Antriebsrades in einer geraden Sektion der Bahn bewegbar ist, das radial an dem Förderelement in Längsrichtung angreift und deren Zahnteilung an die Zahnteilung der Schabelemente des Förderelementes angepaßt ist, und wobei ein Leitungsabschnitt an einer Futterzufuhr angeschlossen ist,
dadurch gekennzeichnet, daß die Schabelemente durch einen rechteckigen, zu einer offenen Schraubenfeder (9) gebogenen Draht gebildet werden, die das Förderelement bildet, wobei die kurzen Seiten des rechteckigen Querschnitts (12) des Drahtes auf der radialen Außenseite und Innenseite der Schraubenfeder positioniert sind, daß das Antriebsrad als Zahnrad ausgebildet ist, und daß die Zähne dieses Zahnrades (13) abgeschrägte Flächen aufweisen und in eine gerade horizontale Sektion der Bahn in einer Zone eindringen, die dem Boden der Sektion gegenüberliegt, um an den langen Seiten des rechteckigen Querschnitts des Drahtes zwischen den Windungen der Schraubenfeder anzugreifen.

2. Futtertransportsystem nach Anspruch 1, dadurch gekennzeichnet, daß das Zahnrad in einem Gehäuse angeordnet ist, wobei der Boden der geraden Sektion den Boden (17) des Gehäuses bildet und ein Teil von zylindrischer Form aufweist, das dem Zahnrad (13) gegenüberliegt, und der Boden mit der Innenfläche der mit dem Gehäuse verbundenen Leitungen ausgerichtet ist.

## Revendications

1. Système de transport d'aliment comprenant une piste continue sous la forme de canaux de présentation ou de distribution d'aliment reliés par des conduits de section transversale circulaire ou des tubes ayant des sections en forme d'arc, un élément transporteur sans fin parcourant les canaux et les conduits ou tubes et agencé pour suivre les sections en forme d'arc, cet élément transporteur sans fin constituant des organes racleurs et pouvant être déplacé tout au long de la piste continue à l'aide d'une roue d'entraînement située dans une droite portion de ladite piste et venant radialement en prise avec l'élément transporteur en direction longitudinale, le pas des dents de la roue d'entraînement étant adapté au pas des organes racleurs de l'élément transporteur, une portion de conduit étant reliée à une alimentation en aliment, caractérisé en ce que les organes racleurs sont constitués par un fil rectangulaire courbé de manière à former un ressort hélicoïdal ouvert (9) formant l'élément transporteur et ayant les petits côtés de sa section transversale rectangulaire (12) du fil placés sur les côtés radialement extérieur et intérieur du ressort hélicoïdal, en ce que la roue d'entraînement comporte une roue dentée et en ce que les dents de cette roue dentée (13) sont munies des faces chanfreinées, lesdites dents pénétrant une droite section horizontale de la piste dans une zône en face du fond de ladite section pour venir au contact des grands côtés de la section transversale rectangulaire du fil entre les spires du ressort hélicoïdal.

2. Système de transport d'aliment selon la revendication 1, caractérisé en ce que la roue dentée est située dans un carter, le fond (17) de la droite section formant le fond (17) du carter et ayant une partie de forme cylindrique en face de la roue dentée (13), lequel fond est aligné avec la surface intérieure des conduits reliés au carter.
